# EUROPEAN PATENT APPLICATION

(11) **EP 1 617 570 A1**
(43) Date of publication of application: **18.01.2006**
(21) Application number: 05254273.5
(22) Date of filing: 07.07.2005
(51) Int. Cl.: H04B 7/06, H04L 1/00, H04L 1/06

(54) **Method for controlling transmissions using both diversity and nondiversity transmission schemes**

(30) Priority: 12.07.2004 US 889456
(71) Applicant: LUCENT TECHNOLOGIES INC., Murray Hill, New Jersey 07974-0636 (US)
(72) Inventor: Khan, Farooq Ullah, Manalapan New Jersey 07726 (US); Viswanathan, Harish, Basking Ridge Somerset New Jersey 07920 (US)
(74) Representative: Sarup, David Alexander

(57) **Abstract**

A wireless communications system is provided in which transmissions may be made in either a diversity mode or a non-diversity mode on a slot by slot basis. When transmitting in the diversity mode, separate pilot signals are delivered over a first and second antenna. When transmitting in the non-diversity mode, substantially identical pilot signals are delivered over the first and second antennas with available pilot power substantially equally distributed therebetween.

## Description

### BACKGROUND OF THE INVENTION

### 1. FIELD OF THE INVENTION

This invention relates generally to telecommunications, and more particularly, to wireless communications.

### 2. DESCRIPTION OF THE RELATED ART

A typical cellular radio system consists of a collection of fixed base stations (BS) that define radio coverage areas or cells. Typically, a non-line-of-sight (NLOS) radio propagation path exists between a base station and a mobile station (MS) due to natural and man-made objects that are situated between the base station and the mobile station. As a consequence, the radio waves propagate via reflections, diffractions and scattering. Waves arriving at the MS in the downlink direction (at the BS in the uplink direction) experience constructive and destructive additions because of different phases of the individual waves. This is due the fact that, at high carrier frequencies typically used in cellular wireless communication, small changes in the differential propagation delays introduce large changes in the phases of the individual waves. If the MS is moving or there are changes in the scattering environment, then the spatial variations in the amplitude and phase of the composite received signal will manifest themselves as the time variations known as Rayleigh fading or fast fading. The time-varying nature of the wireless channel may dictate that a relatively high signal-to-noise ratio (SNR) is useful in some applications to provide a desired bit error or packet error reliability.

Diversity is widely used to combat the effect of fast fading. One goal of diversity is to provide the receiver with multiple branches that carry faded replicas of the same information- bearing signal. Assuming independent fading on each of the diversity branches, the probability that the instantaneous SNR is below a certain threshold on all of the branches is approximately *p*^{L} where *p* is the probability that the instantaneous SNR is below the same threshold on each diversity branch.

Methods of providing diversity generally fall into the following categories: space, angle, polarization, field, frequency, time and multipath diversity. Space diversity can be achieved by using multiple transmit or receive antennas. The spatial separation between the multiple antennas is chosen so that the diversity branches experience fading with little or no correlation. Transmit diversity uses multiple transmit antennas to provide the receiver with multiple uncorrelated replicas of the same signal. Transmit diversity schemes can further be divided into open loop transmit diversity and closed-loop transmit diversity schemes. In the open loop transmit diversity approach, no feedback is required from the receiver. In one known arrangement of closed loop transmit diversity, the receiver computes a phase and amplitude adjustment that should be applied at the transmitter antennas to maximize the received signal power at the receiver.

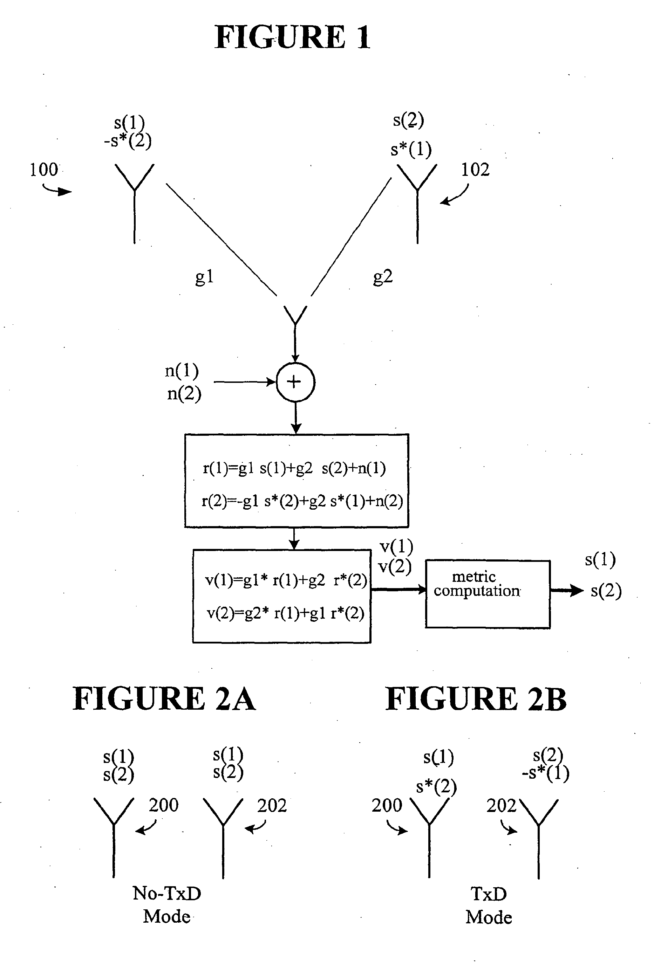

One example of a transmit diversity scheme is the Alamouti 2X1 space-time diversity scheme. In this approach during any symbol period, two data symbols are transmitted simultaneously from the two transmit antennas. Suppose during the first symbol interval, the symbols transmitted from antennas 100 and 102 are denoted as s(1) and s(2), respectively as shown in Figure 1. During the next symbol period, the symbols transmitted from the antennas 100 and 102 are -s*(2) and s*(1) where x* represents a complex conjugate of x. With some processing at the receiver, original symbols s(1) and s(2) can be recovered from -s*(2) and s*(1). Note that instantaneous channel gain estimates (g1 and g2) on antenna 100 and antenna 102, respectively, are used for processing at the receiver. Channel gain estimates may be obtained at the receiver by providing separate pilot symbols on both of the antennas. The diversity gain achieved by Alamouti coding is the same as that achieved in Maximum Ratio Combining (MRC).

A 2X1 Alamouti scheme can also be implemented in a space-frequency coded form. In this case, the two symbols are sent on two different frequencies, for example, on different subcarriers in an Orthogonal Frequency Division Multiplexing (OFDM) system.

In evolved wireless data systems, such as the well-known 1xEV-DO and 1xEV-DV standards, as well as the High Speed Downlink Packet Access (HSDPA) specification in the Universal Mobile Telecommunication System (UMTS) standard, the base station performs channel sensitive fast scheduling based on channel quality feedback from the users. Moreover, new technologies such as adaptive modulation and coding (AMC) and hybrid ARQ (HARQ) have also been introduced to improve overall system capacity. In general, a scheduler selects a user for transmission at a given time. Adaptive modulation and coding allows selection of the appropriate transport format (modulation and coding) for the current channel conditions seen by the user. The channel sensitive fast scheduling provides gains for applications that can tolerate some delay. The channel sensitive fast scheduling may exploit the time-varying nature of the wireless channel and schedule users during upfade periods where the received SNR is the highest.

Performance gains from channel sensitive fast scheduling are generally achieved for mobiles moving at low to medium speeds. At high mobile speeds, the channel quality at the time of actual transmission may be significantly different from the channel quality estimates due to channel quality feedback and/or processing delays. When the channel quality can be tracked with reasonable accuracy, the performance gains from channel sensitive fast scheduling are higher without the use of transmit diversity. This is because the dynamic range of the received signal-to-interference-plus noise ratio (SINR) is larger without transmit diversity than with transmit diversity. A large dynamic range of the SINR without transmit diversity allows users to be scheduled at higher SINR. However, at high mobile speeds where the channel quality variations cannot be tracked with reasonable accuracy, the gains from channel sensitive fast scheduling are expected to be negligible and the use of transmit diversity may be beneficial. Therefore, a hybrid approach where the transmit diversity is used only for higher speed mobiles and/or delay-sensitive applications can be useful (the speed of the mobiles can be inferred from the feedback provided).

In cases when transmit diversity is not used, the transmission takes place from only one antenna. When transmit diversity is used, the transmissions takes place from both transmit antennas. To make use of transmit diversity, channel estimates are generally required for each of the antenna transmit-receive pairs. Therefore, pilot symbols are typically transmitted on each of the transmit antennas.

The transmit diversity approach used in the prior art suffers from a number of shortcomings. For example, a system that requires the base station to dynamically switch between transmit diversity mode and no transmit diversity mode is highly complex to implement. For example, when no transmit diversity is used for a transmission, total power is transmitted from a single antenna requiring larger capacity and more complex power amplifiers. Additionally, pilot overhead is substantially increased due to constant transmissions of pilot symbols from each of the transmit antennas

The present invention is directed to overcoming, or at least reducing, the effects of, one or more of the problems set forth above.

### SUMMARY OF THE INVENTION

In one embodiment of the present invention, a method is provided. The method comprises transmitting information using a diversity scheme during at least a first selected portion of a transmission period, and transmitting information using a non-diversity scheme during at least a second selected portion of a transmission period. At least two pilot signals are transmitted while transmitting information using the diversity scheme.

In another embodiment of the present invention, a method for receiving information is provided. The method comprises receiving information transmitted using a diversity scheme during at least a first selected portion of a transmission period, and receiving information transmitted using a non-diversity scheme during at least a second selected portion of a transmission period. At least two pilot signals are received while receiving the information transmitted using the diversity scheme.

### BRIEF DESCRIPTION OF THE DRAWINGS

The invention may be understood by reference to the following description taken in conjunction with the accompanying drawings, in which like reference numerals identify like elements, and in which:
Figure 1 illustrates a stylized representation of a communications system that employs a conventional transmit diversity scheme;
Figures 2A and 2B illustrate stylized representations of two transmission schemes that respectively do not and do employ transmit diversity;
Figure 3 illustrates a stylized representation of a downlink of a 1xEV-DO slot, with pilot, MAC and Data symbols time-multiplexed therein;
Figure 4 illustrates a stylized representation of an examplary transmission using transmit diversity on a slot-by-slot basis in a 1xEV-DO system;
Figure 5 illustrates a stylized representation of a downlink of a 1xEV-DO slot with additional pilot symbols in the data field transmitted by the diversity antenna;
Figure 6 illustrates a stylized representation of a downlink of a 1xEV-DO slot with additional pilot symbols in the MAC field transmitted by the diversity antenna; and
Figure 7 illustrates a stylized representation of a downlink of a IxEV-DO slot with additional pilot symbols in the Pilot field transmitted by the diversity antenna.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions may be made to achieve the developers' specific goals, such as compliance with system-related and business-related constraints, which may vary from one implementation to another. Moreover, it will be appreciated that such a development effort might be complex and time-consuming, but would nevertheless be a routine undertaking for those of ordinary skill in the art having the benefit of this disclosure.

The present invention describes a transmit diversity scheme where the transmission modes can be switched between transmit diversity mode and no transmit diversity mode. The total base station power is generally equally split between the transmit antennas regardless of whether the transmission is in transmit diversity mode or in no transmit diversity mode. Moreover, an additional transmit diversity pilot is only sent when the transmission is in diversity mode. That is, when transmitting in the no transmit diversity mode, no additional diversity pilot is sent, resulting in resource savings. In the exemplary embodiments illustrated herein, the instant invention is described in the context of a 2-by-1 (two transmit and one receive antenna) space-time coded transmit diversity concept; however, those skilled in the art will appreciate that the teachings of the present invention may be applied to space-frequency transmit diversity and N-by-M configurations (N transmit and M receive antenna) as well without departing from the spirit and scope of the instant invention.

Turning now to Figure 2A, two data symbols are illustrated as being transmitted simultaneously from the two transmit antennas 200, 202. When no transmit diversity is used, as is illustrated in Figure 2A, during the first symbol interval, the symbols transmitted from the antennas 200, 202 are the same *(i.e.,* s(1) and s(1)). Similarly, during the next symbol period, the symbols transmitted from the antennas 200 and 202 are s(2) and s(2). When transmit diversity is used, as is illustrated in Figure 2B, during the first symbol interval, the symbols transmitted from the antennas 200, 202 are denoted as s(1) and s(2), respectively. However, during the next symbol period, the symbols transmitted from the antennas 200, 202 are -s*(2) and s*(1) where x* represents a complex conjugate of x. When a transmission is performed in transmit diversity mode, instantaneous channel gain estimates g1 and g2 on the antenna 200 and the antenna 202, respectively, are used for processing at a receiver. In the illustrated embodiment, separate pilot symbols on both the antennas 200, 202 are provided for channel gain estimation at the receiver. However, when no transmit diversity is used, a single channel gain may be used.

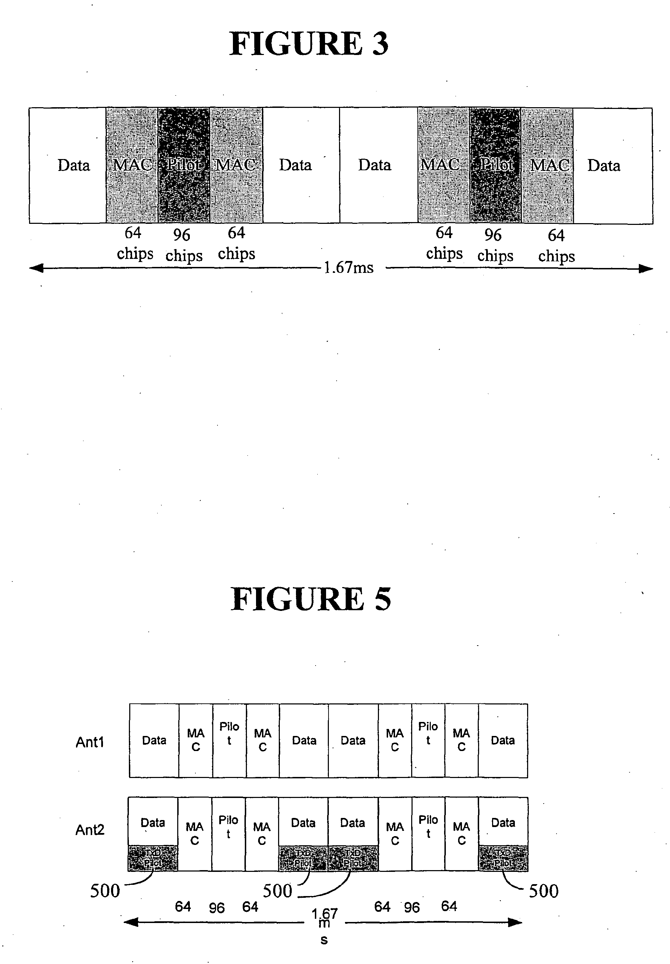

An exemplary embodiment of the present invention is described in the context of a 1xEV-DO (a.k.a., High Rate Packet Data) system. In the downlink of a 1xEV-DO slot, pilot, MAC and Data symbols are time-multiplexed within a 1.67ms slot on a 1.25MHz carrier, as shown in Figure 3. In current 1xEV-DO systems, no transmit diversity is used and the transmission takes place from a single transmit antenna at full base station power.

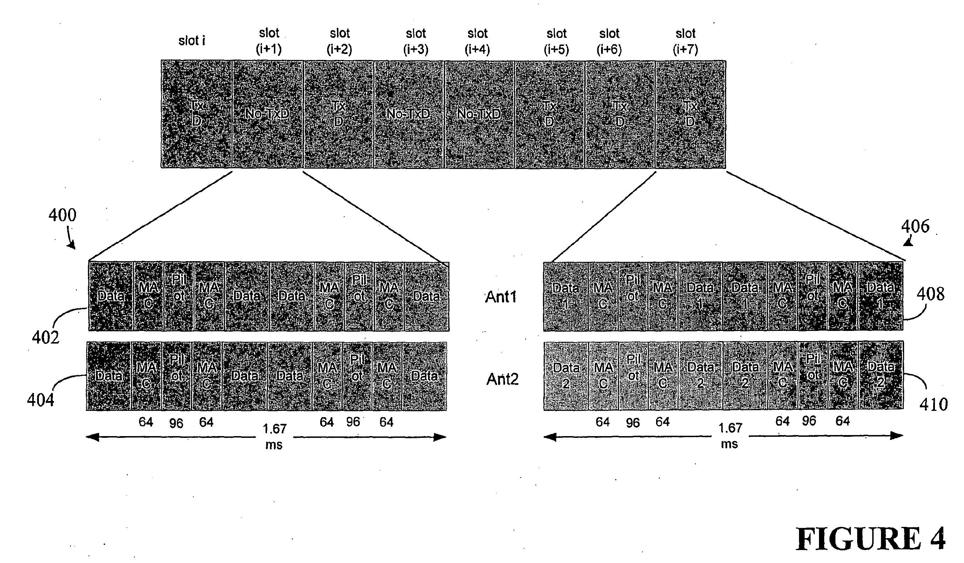

An exemplary transmission using transmit diversity on a slot-by-slot basis in a 1xEV-DO system is shown in Figure 4. In a typical mode of operation of the instant invention, some of the slots (e.g., slots (i), (i+2), (i+5), (i+6) and (i+7)) may be transmitted using the transmit diversity mode (TxD) and other slots (e.g., slots (i+1), (i+3) and (i+4)) may be transmitted in no transmit diversity mode (No-TxD). The transmission in No TxD mode, for example, may be used when transmitting delay-sensitive data such as VoIP frames and/or data transmissions to mobile stations moving at high speeds where the channel quality cannot be accurately tracked. The decision on whether to use transmit diversity mode is made on a slot by slot basis based on factors such as the type of traffic carried, the mobile speed, *etc.*

As pointed out earlier, when no transmit diversity is used, the same symbols are transmitted from the two antennas during both the first and second symbol periods, as shown in the exploded region 400 of Figure 4. That is, by way of example, the slot (i+1) is shown with identical transmissions 402, 404 for the antennas 200, 202, respectively. However, when transmit diversity mode is used, the symbols transmitted from the two antennas are different, as shown in the exploded region 406 of Figure 4. That is, by way of example, the slot (i+7) is shown with dissimilar transmissions 408, 410 for the antennas 200, 202, respectively.

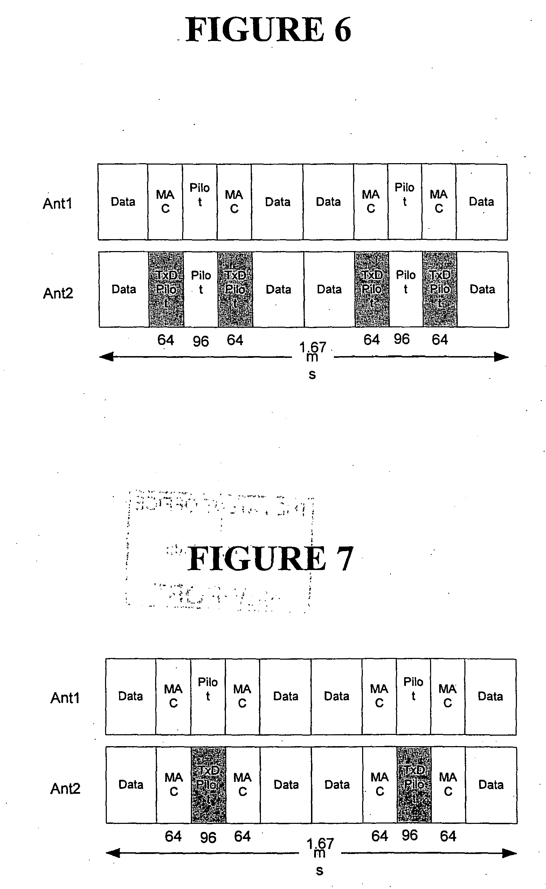

In the transmit diversity mode, additional pilot symbols are carried from the diversity antenna (antenna 202 in this example). As discussed above, the additional pilot symbols may be used in determining channel gain estimates (g1 and g2) at the receiver for both of the antennas 200, 202. In one embodiment of the instant invention, the additional pilot symbols may be carried in the data field transmitted from the diversity antenna (antenna 202), as shown in Figure 5. The pilot symbols can be inserted by puncturing some of the data symbols. In another embodiment, the pilot symbols may be carried over a separate Walsh code transmitted in the data field from the diversity antenna 202.

In another embodiment, the diversity pilot symbols may be carried in the MAC field transmitted from the diversity antenna 202, as depicted in Figure 6. The pilot symbols in this case are carried over a separate Walsh code transmitted in the MAC field from the diversity antenna 202.

In yet another embodiment of the instant invention, the diversity pilot symbols may be carried in the pilot field transmitted from the diversity antenna, as depicted in Figure 7. The pilot symbols in this case are carried over a separate Walsh code transmitted in the pilot field from the diversity antenna 202. It may be useful to transmit the diversity pilot on a different Walsh code than that used for the pilot from the non-diversity antenna 200 to keep the two pilot transmissions orthogonal.

In an alternate embodiment of the invention, a slowly time-varying phase rotation may be employed on the signal (both pilot and data symbols) transmitted from the second antenna in both the Transmit Diversity and No Transmit Diversity Modes to prevent the formation of static null patterns at mobile locations that experience no time variations in the scattering of the transmitted signal.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices as well as executable instructions contained within one or more storage devices. The storage devices may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions, when executed by a respective control unit, cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method of communicating information comprising:
transmitting information using a diversity scheme during at least a first selected portion of a transmission period;
transmitting information using a non-diversity scheme during at least a second selected portion of a transmission period; and
transmitting at least two pilot signals while transmitting information using the diversity scheme.

2. A method, as set forth in claim 1, wherein transmitting at least two pilot signals while transmitting information using the diversity scheme further comprises transmitting a first pilot signal via a first antenna and transmitting a second pilot signal via a second antenna.

3. A method, as set forth in claim 2, wherein transmitting a first pilot signal via a first antenna and transmitting a second pilot signal via a second antenna further comprises transmitting the first pilot signal using a Walsh code and transmitting the second pilot signal using an orthogonal Walsh code.

4. A method, as set forth in claim 2, wherein transmitting a first pilot signal via a first antenna and transmitting a second pilot signal via a second antenna further comprises transmitting the first pilot signal using a subcarrier and transmitting the second pilot signal using an orthogonal subcarrier.

5. A method, as set forth in claim 1, wherein transmitting information using the diversity scheme during at least the first selected portion of the transmission period further comprises transmitting a first signal via a first antenna and a second, different signal via a second antenna, wherein transmitting the first signal via the first antenna further comprises transmitting the first signal with a phase rotation applied thereto.

6. A method, as set forth in claim 5, wherein transmitting the second signal via the second antenna further comprises transmitting the second signal with a phase rotation applied thereto.

7. A method, as set forth in claim 1, wherein transmitting information using the non-diversity scheme during at least the second selected portion of the transmission period further comprises transmitting substantially identical information over a first and second antenna.

8. A method, as set forth in claim 7, wherein transmitting substantially identical information over the first and second antennas further comprises transmitting a substantially identical pilot signal over the first and second antenna.

9. A method, as set forth in claim 8, wherein transmitting a substantially identical pilot signal over the first and second antenna further comprises dividing available pilot power between the first and second antennas.

10. A method, as set forth in claim 6, wherein transmitting a substantially identical pilot signal over the first and second antenna further comprises equally dividing available pilot power between the first and second antennas.
